# EUROPÄISCHE PATENTANMELDUNG

(11) **EP 2 884 636 A2**
(43) Veröffentlichungstag der Anmeldung: **17.06.2015**
(21) Anmeldenummer: 14191595.9
(22) Anmeldetag: 04.11.2014
(51) Int. Cl.: H02K 21/24, H02K 1/14

(54) **Statoreinheit für eine elektrische Maschine sowie elektrische Maschine**

(30) Priorität: 16.12.2013 DE 102013226020
(71) Anmelder: ROBERT BOSCH GMBH, 70442 Stuttgart (DE)
(72) Erfinder: Flieller, Damien, 67000 Strasbourg (FR); Kremer, Mickael, 70806 Kornwestheim (DE)

(57) **Zusammenfassung**

Die Erfindung betrifft eine Statoreinheit (3) für eine mehrphasige elektrische Maschine (1), umfassend:
- einen Rückschlussbereich (35) aus magnetischem Material mit einer Fläche; und
- mehrere von der Fläche hervorstehende Statorzähne (31, 41), die in Um-fangsrichtung (U) zueinander benachbart in mindestens einer kreisförmigen Statorzahnanordnung (36) angeordnet sind und zwischen denen Zwischenräume (32, 42) zur Aufnahme von Statorwicklungen (34) vorgesehen sind, wobei durch die Zwischenräume (32, 42) Statorwicklungen (34) für jede Phase geführt sind, so dass jede der Statorwicklungen (34) mehrfach in Form von Schlingen (39) zwischen mindestens einem radial äußeren Ende mindestens eines Statorzahns (31, 41) und mindestens einem radial inneren Ende mindestens eines weiteren Statorzahns (31, 41) der Statorzahnanordnung (36) verläuft.

## Beschreibung

### Technisches Gebiet

Die vorliegende Erfindung betrifft elektrische Maschinen, wie beispielsweise für Antriebseinheiten von Kraftfahrzeugen, insbesondere elektrische Maschinen mit Scheibenrotoren.

### Stand der Technik

Als Transversalflussmaschinen ausgebildete elektrische Maschinen zeichnen sich durch eine hohe Leistungsdichte bei einem vergleichsweise geringen Gewicht aus. Beispielsweise ist aus der Druckschrift WO 2009/115247 A1 eine Transversalflussmaschine mit einem Scheibenrotor bekannt. In eine Rotorscheibe des Scheibenrotors sind in konstantem Abstand von einer Drehachse Permanentmagnete eingebettet, die in Umfangsrichtung magnetisiert sind. Benachbarte Permanentmagnete sind zueinander entgegengesetzt magnetisiert, so dass die einander zugewandten Pole zweier benachbarter Permanentmagnete jeweils gleichartig sind. Die Feldlinien zwischen diesen gleichartigen Polen werden damit so überlagert, dass ein sich in axialer und radialer Richtung von dem Polzwischenraum ausbreitendes Rotormagnetfeld erzeugt wird.

Der Scheibenrotor ist axial zwischen zwei Statoreinheiten angeordnet, die jeweils eine konzentrisch um eine Motorachse verlaufende Statorwicklung aufweisen. Zu jeder der Statorwicklungen radial nach innen und außen versetzt weist jede der Statoreinheiten sich in Umfangsrichtung erstreckende und in Richtung des Scheibenrotors hervorstehende innere und äußere Statorzähne auf.

Bei der Bestromung der Statorwicklung einer Statoreinheit wirkt eine Kraft auf die Magnetpole des Scheibenrotors in Richtung des in Umfangsrichtung am nächsten gelegenen Magnetpols der Statoreinheiten, der eine zu dem betreffenden Magnetpol entgegengesetzte Magnetisierung aufweist. Dadurch kann ein von der Position des Scheibenrotors sowie von Betrag und Vorzeichen des Statorstroms abhängiges Drehmoment erzeugt werden.

Um Anlaufschwierigkeiten zu vermeiden, werden Transversalflussmaschinen in der Regel mehrphasig ausgeführt, wobei mehrere Scheibenrotoren axial zueinander versetzt angeordnet und jeweils mit einem eigenen Paar von Statoreinheiten versehen sind. Die Radien der Statorwicklungen sind dabei im Wesentlichen gleich vorgesehen, um einen elektromagnetisch symmetrischen Aufbau zu erreichen. Durch den elektromagnetisch symmetrischen Aufbau wird ein Ausgleich der beim Betrieb der Transversalflussmaschine auftretenden Kräfte und damit eine Reduzierung von Drehmomentschwankungen ermöglicht.

Ein derartiger Aufbau einer mehrphasigen Transversalflussmaschine ist jedoch aufwändig und hat eine verringerte Leistungsdichte bzw. einen erhöhten Platzbedarf.

Um einen mehrphasigen Betrieb zu ermöglichen, können bei der obigen Transversalflussmaschine der WO 2009/115247 A1 die Statorwicklungen abschnittsweise zwischen den Statorzähnen geführt werden, so dass verschiedenen Phasen zugeordnete Statorwicklungen in jeweils einem Abschnitt zwischen den Statorzähnen eines Statorzahnrings angeordnet sind. Diese Ausführung hat jedoch den Nachteil, dass der Abschnitt der Statorwicklung, der außerhalb der zwischen den Statorzähnen befindlichen Nut geführt wird, keinen Beitrag zum Drehmoment der Transversalflussmaschine leistet.

Es ist daher Aufgabe der vorliegenden Erfindung, eine Statoreinheit zum Aufbau einer mehrphasigen elektrischen Maschine zur Verfügung zu stellen, die einen vereinfachten Aufbau aufweist und platzsparend aufgebaut werden kann. Weiterhin soll die Statoreinheit ermöglichen, dass die Statorwicklungen in ihrem gesamten Umfang zur Drehmomentbildung beitragen.

### Offenbarung der Erfindung

Diese Aufgabe wird durch die Statoreinheit für eine elektrische Maschine, insbesondere für eine Transversalflussmaschine, gemäß Anspruch 1 sowie durch die elektrische Maschine gemäß dem nebengeordneten Anspruch gelöst.

Weitere vorteilhafte Ausgestaltungen sind in den abhängigen Ansprüchen angegeben.

Gemäß einem ersten Aspekt ist eine elektrische Statoreinheit für eine mehrphasige elektrische Maschine, insbesondere für eine Transversalflussmaschine vorgesehen, umfassend:
- einen Rückschlussbereich aus magnetischem Material mit einer Fläche; und
- mehrere von der Fläche hervorstehende Statorzähne, die in Umfangsrichtung zueinander benachbart in mindestens einer kreisförmigen Statorzahnanordnung angeordnet sind und zwischen denen Zwischenräume zur Aufnahme von Statorwicklungen vorgesehen sind,
   wobei durch die Zwischenräume Statorwicklungen für jede Phase geführt sind, so dass jede der Statorwicklungen mehrfach schlingenförmig zwischen mindestens einem radial äußeren Ende mindestens eines Statorzahns und mindestens einem radial inneren Ende mindestens eines weiteren Statorzahns der Statorzahnanordnung verläuft.

Eine Idee der obigen Statoreinheit für eine elektrische Maschine besteht darin, jede der Statoreinheiten mit mehreren, den einzelnen Phasen zugeordneten Statorwicklungen auszubilden. Die Statorwicklungen sind dazu schlingenförmig um die in Umfangsrichtung angeordneten Statorzähne gelegt, so dass jede der Statorwicklungen bei ihrer Bestromung die gleichen Statorzähne zum Bereitstellen des Statormagnetfelds verwendet. Dadurch tragen die Statorwicklungen für jede elektrische Phase über den gesamten Umfang der Statoreinheiten hinweg zur Drehmomentbildung bei und Drehmomentwelligkeiten aufgrund von Asymmetrien können vermieden werden.

Weiterhin ermöglicht die obige Statoreinheit einen vereinfachten und platzsparenden Aufbau einer elektrischen Maschine. Weiterhin sollen die Statorwicklungen in ihrem gesamten Umfang zur Drehmomentbildung beitragen.

Die Statorzähne können entlang einer radialen Erstreckung keilförmig und/oder kreissegmentförmig mit jeweils einem breiten Ende und einem verjüngten Ende ausgebildet sein, wobei die verjüngten Enden von jeweils zwei benachbarten Statorzähnen entgegengesetzt ausgerichtet sind, so dass ein verjüngtes Ende eines Statorzahns zwischen zwei breiten Enden der benachbarten Statorzähne angeordnet ist.

Weiterhin kann vorgesehen sein, dass ein Wicklungsstrang mindestens einer der Statorwicklungen periodisch um ein breites Ende eines äußeren der Statorzähne, dessen breites Ende radial außen angeordnet ist, anschließend beidseitig davon durch Zwischenräume, die zwischen einem zu dem betreffenden äußeren Statorzahn benachbarten inneren Statorzahn, dessen breites Ende radial innen angeordnet ist, und einem zu dem betreffenden äußeren Statorzahn benachbarten äußeren Statorzahn vorgesehen sind, und anschließend beidseitig des betreffenden äußeren Statorzahn jeweils um ein breites Ende eines inneren Statorzahns geführt, der zu dem betreffenden äußeren Statorzahn jeweils um drei Statorzähne in Umfangsrichtung versetzt angeordnet ist.

Insbesondere können die Statorzähne stegförmig entlang einer radialen Erstreckung ausgebildet und insbesondere in Umfangsrichtung mit gleichem Abstand zueinander angeordnet sein.

Es kann dazu vorgesehen sein, dass periodisch entsprechend einer Anzahl n der Phasen für jeden n-ten Statorzahn einer der Wicklungsstränge einer der Statorwicklungen einen der Statorzähne an seinem radial äußeren Ende umläuft und in den Zwischenräumen an beiden Seiten des Statorzahns radial nach innen geführt wird.

Gemäß einer Ausführungsform können die Statorzähne mit einer Höhe von dem Rückschlussbereich abstehen, die mindestens der Summe der Dicken der Statorwicklungen aller Phasen entspricht.

Es kann weiterhin vorgesehen sein, dass die Statorzähne an den breiten Enden abgerundet sind, insbesondere zumindest in den Abschnitten, über die ein Wicklungsstrang einer der Statorwicklungen verläuft. Auf diese kann eine Beschädigung des Wicklungsstrangs durch eine Kante vermieden werden. Auch werden die Verläufe der Wicklungsstränge dadurch in vorbestimmter Weise geführt, so dass diese definierte elektrische Eigenschaften aufweisen.

Weiterhin können die mehreren Statorwicklungen in mehreren in axialer Richtung ausgebildeten Lagen um die Statorzähne verlaufen, wobei der Querschnitt von mindestens einem der Statorzähne in einem sich in axialer Richtung erstreckenden Abschnitt durch Verlängerung mindestens eines Endes vergrößert ist, wobei sich der Abschnitt zwischen dem Rückschlussbereich und der Statorwicklung befindet.

Gemäß einer Ausführungsform können sich die Statorzähne in Richtung ihres abstehenden Endes verjüngen.

Es können mehrere konzentrisch angeordnete Statorzahnanordnungen vorgesehen sein.

Gemäß einem weiteren Aspekt ist eine elektrische Maschine vorgesehen, insbesondere eine Transversalflussmaschine, umfassend:
- einen Scheibenrotor mit in Umfangsrichtung polarisierten Permanentmagneten; und
- mindestens eine der obigen Statoreinheit, die axial versetzt zu dem Scheibenrotor angeordnet ist, wobei sich die radialen Breiten der Permanentmagnete und der mindestens einen Statorzahnanordnung entsprechen und die Permanentmagnete einander in axialer Richtung gegenüberliegen .

### Kurzbeschreibung der Zeichnungen

Ausführungsformen werden nachfolgend anhand der beigefügten Zeichnungen näher erläutert. Es zeigen:
- Figuren 1a, 1b und 1c: Darstellungen verschiedener Ansichten einer mehrphasigen elektrischen Maschine mit einem Scheibenrotor;
- Figuren 2a und 2b: perspektivische Darstellungen eines Ausschnitts aus einer Statoreinheit mit veränderter Startorzahnform zur Reduzierung von Sättigungseffekten;
- Figur 3: eine perspektivische Darstellung einer Statoreinheit mit zwei Statorzahnreihen;
- Figuren 4a und 4b: verschiedene perspektivische Ansichten eines Ausschnitts einer Statoreinheit mit einer alternativen Statorzahntopologie; und
- Figuren 5a und 5b: eine Draufsicht und eine perspektivische Ansicht von Statorzähnen eines Ausschnitts einer Statoreinheit der Figur 4.

### Beschreibung von Ausführungsformen

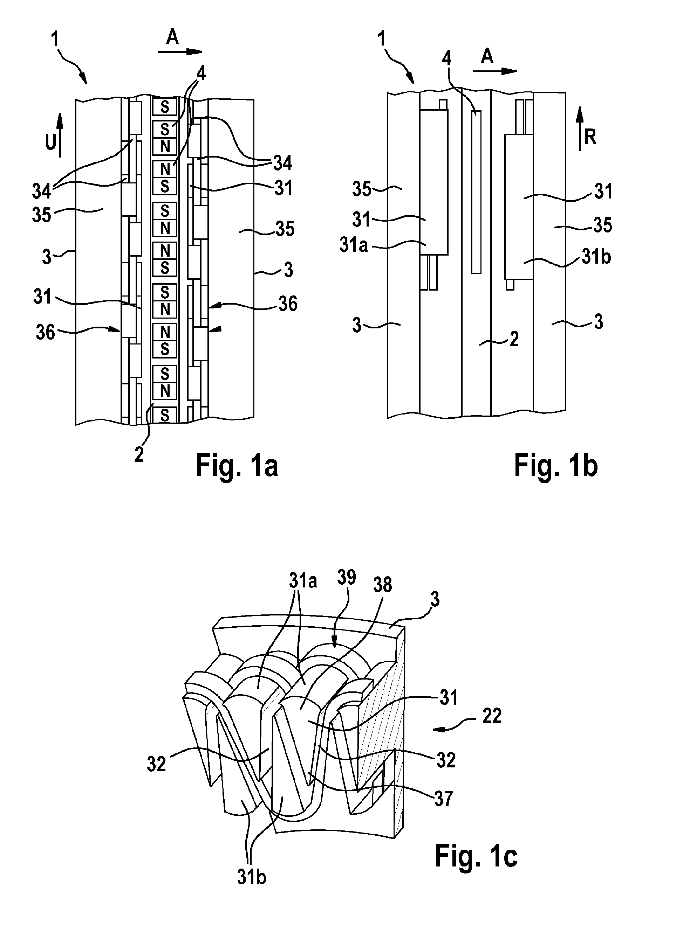

Die Figuren 1a, 1b und 1c zeigen Querschnittsdarstellungen einer dreiphasigen elektrische Maschine 1, die in dieser Ausführungsform als Transversalflussmaschine ausgebildet ist, mit einem Scheibenrotor 2. Figur 1 a zeigt eine radiale Draufsicht auf einen Querschnitt in Umfangsrichtung, Figur 1b eine Querschnittsansicht in tangentialer Richtung und Figur 1c eine perspektivische Darstellung eines Ausschnitts einer der Statoreinheiten 3.

Die elektrische Maschine 1 umfasst zwei Statoreinheiten 3, zwischen denen der Scheibenrotor 2 drehbeweglich um eine Drehachse angeordnet ist, die sich entlang einer axialen Richtung A erstreckt. Der Scheibenrotor 2 ist aus einem magnetisch und elektrisch nicht leitenden Material ausgebildet, wie beispielsweise aus einem Kohlefaserverbundwerkstoff oder dergleichen, und enthält darin eingebettete Permanentmagnete 4.

Die Permanentmagnete 4 sind entlang einer ringförmigen Magnetringanordnung in dem Scheibenrotor 2 vorgesehen, wobei die Permanentmagnete 4 in der Magnetringanordnung in einer Umfangsrichtung U voneinander beabstandet sind.

Die Polarisierung der Permanentmagnete 4 ist in der Magnetringanordnung in Umfangsrichtung U ausgerichtet, wobei die Polarisierungen von jeweils zwei in Umfangsrichtung U benachbarten Permanentmagneten 4 zueinander entgegengesetzt sind, so dass jeweils gleichpolige Magnetpole einander zugewandt sind. Die einander in Umfangsrichtung U zugewandten Magnetpole der Permanentmagnete 4 bilden Rotorpole mit einem resultierenden Magnetfeld aus, die sich von dem Bereich zwischen jeweils zwei Magnetpolen der Permanentmagnete 4 in radialer Richtung R und axialer Richtung A aus dem Scheibenrotor 2 erstreckt.

Es können auch zwei oder mehr als zwei Magnetringanordnungen vorgesehen sein, wobei die Magnetringanordnungen dabei vorzugsweise konzentrisch sein können. In diesem Fall ist die radiale Breite jeder Magnetringanordnung im Wesentlichen identisch und vorzugsweise ist die Anzahl der Permanentmagnete 4 in jeder der Magnetringanordnungen ebenfalls gleich.

Die Statoreinheiten 3 sind einander gegenüberliegend angeordnet, wobei der Scheibenrotor 2 frei drehbeweglich so zwischen den Statoreinheiten 3 angeordnet ist, dass die durch die Permanentmagnete 4 der Magnetringanordnung ausgebildeten Rotorpole zwischen Statorzähnen 31 der Statoreinheiten 3 verlaufen.

Die Statorzähne 31 sind in jeder der Statoreinheiten 3 ringförmig entlang einer Statorzahnanordnung 36 angeordnet, so dass die Statorzahnanordnungen 36 beider Statoreinheiten 3 einander gegenüberliegen. Die Statorzahnanordnungen 36 beider Statoreinheiten 3 weisen vorzugsweise die gleiche radiale Breite auf und liegen sich in axialer Richtung A gegenüber.

Die Statorzähne 31 bilden gemeinsam mit einem magnetischen Rückschlussbereich 35 einen Statorkörper aus magnetisch leitfähigem Material. Die Statorzähne 31 können an dem magnetischen Rückschlussbereich 35 angebracht bzw. einstückig mit diesem, z. B. durch Pressformen eines SMC-Materials, ausgebildet sein. Die Statorzähne 31 sind jeweils in axialer Richtung A, d. h. in Richtung der Drehachse des Scheibenrotors 2, von dem Statorkörper hervorstehend, d. h. als Vorsprünge, ausgebildet.

Die Statorzähne 31 erstrecken sich in radialer Richtung R möglichst über die gesamte radiale Breite der Permanentmagnete 4 im Scheibenrotor 2, wobei die Statorzähne 31 in Umfangsrichtung U durch Zwischenräume 32 voneinander beabstandet sind, um darin Wicklungsstränge der Statorwicklungen 34 mit jeweils einem oder mehreren Wicklungsdrähten (je nach Windungszahl) aufzunehmen. An jeder Statoreinheit 3 befindet sich eine Anzahl von separaten Statorwicklungen 34, die der Anzahl der Phasen der Transversalflussmaschine 1 entspricht.

Die einer Phase zugeordneten Statorwicklungen 34 sind bezüglich der einander gegenüberliegenden Statoreinheiten 3 jeweils in Umfangsrichtung U zueinander versetzt angeordnet. Auf diese Weise können die Feldlinien im Luftspalt, die sich aus der Überlagerung der von den Permanentmagneten 4 im Scheibenrotor 2 und von den Statorwicklungen 34 in den Statoreinheiten 3 erzeugten Magnetfelder ergeben und die die Bildung des Motormoments verursachen, im Wesentlichen schräg zur axialen Richtung A bzw. in Umfangsrichtung U geneigt zur axialen Richtung A verlaufen, also im Wesentlichen quer zur Magnetisierungsrichtung der Permanentmagnete 4.

Wie insbesondere in der Fig. 1c zu erkennen ist, weisen die Statorzähne 31 jeweils einen (bezüglich der axialen Richtung A) keilförmigen bzw. kreissegmentförmigen Querschnitt mit einem bezüglich einer radial ausgerichteten Längsrichtung spitz zulaufenden bzw. verjüngtem Ende 37 und mit einem gegenüberliegenden breiten Ende 38 auf. Die Statorzähne 31 sind entlang der jeweiligen Statorzahnanordnung 36 zueinander versetzt so angeordnet, dass diese mit ihrem spitz zulaufenden bzw. verjüngtem Ende 37 jeweils zwischen zwei benachbarte, entgegengesetzt gerichtete Statorzähne 31 hineinragen. Die breiten Enden 38 der Statorzähne 31 sind abgerundet, so dass sich der entsprechende Wicklungsstrang der entsprechenden Statorwicklung 34 beim Anliegen an den Verlauf der Rundung anschmiegen kann.

Die Zwischenräume 32 zwischen den Statorzähnen 31 dienen dazu, diese voneinander magnetisch zu trennen und die Statorwicklungen 34 aufzunehmen. Die Höhe der Statorzähne 31 in axialer Richtung A ist so gewählt, dass sich für jede Phase der Wicklungsstrang der entsprechenden Statorwicklung 34 einlegen lässt. Wie in Fig. 1c am Beispiel der dreiphasigen elektrische Maschine 1 dargestellt, ist die Höhe der Statorzähne 31 in axialer Richtung A ausreichend, um drei Lagen von Statorwicklungen 34 übereinander anzuordnen.

Die Statoranordnung 36 jeder der Statoreinheiten 3 weist also eine Reihe von Statorzähnen 31 auf, wobei ein äußerer Statorzahn 31 a, dessen breites Ende 38 radial außen liegt, und ein innerer Statorzahn 31 b, dessen breites Ende 38 radial innen liegt, wechselweise entlang der Umfangsrichtung U angeordnet sind. Die Zwischenräume 32 sind zwischen jedem äußeren Statorzahn 31 a und den dazu benachbarten inneren Statorzähnen 31 b vorgesehen.

Die Wicklungsstränge der Statorwicklungen 34 der einzelnen Phasen sind schlingenförmig (in Schlingen 39) um die Statorzähne 31 geführt. Im Detail wird zur Erläuterung des Verlaufs einer Statorwicklung 34 von einem äußeren Statorzahn 31a als Referenzstatorzahn ausgegangen. Der Wicklungsstrang ist dabei periodisch zunächst um das breite Ende 38 des Referenzstatorzahns, anschließend beidseitig davon durch die zwischen einem zu dem Referenzstatorzahn benachbarten inneren Statorzahn 31 b und einem zu dem Referenzstatorzahn benachbarten äußeren Statorzahn 31 a vorgesehenen Zwischenräume 32 und anschließend beidseitig des Referenzstatorzahns jeweils um ein breites Ende 38 eines inneren Statorzahns 31 b geführt, der zu dem Referenzstatorzahn jeweils um drei Statorzähne 31 in Umfangsrichtung U versetzt angeordnet ist. Dies führt dazu, dass jede Schlinge 39 der Statorwicklung 34 drei zueinander benachbarte keilförmige bzw. kreissegmentförmige Statorzähne 31 umgibt. Die Statorwicklungen 34 sind jeweils um einen äußeren der Statorzähne 31 a bzw. um einen inneren der Statorzähne 31 b zueinander versetzt angeordnet, so dass sich an den Statorzähnen 31 Magnetfelder entsprechend der Phasenlage des die Statorwicklungen 34 bestromenden Statorstroms ausbilden.

Die Statorwicklungen 34 sind für eine dreiphasige elektrische Maschine 1 um einen Winkel von 120°/elektrische Motorlage (also 120°/Polpaarzahl mechanisch) verschoben. Durch diese Ausführung wird die Gesamtleistung der elektrische Maschine 1 deutlich erhöht, da der durch jede Phase bewirkte Beitrag des Statormagnetfelds auf die gesamte radiale Höhe der durch die Permanentmagnete 4 ausgebildeten Rotorpole wirkt. Dadurch wird der Fluss in jeder Phase erhöht, was zu einer größeren induzierten Spannung führt. Statorwicklungen 34 für jede Phase umgeben die gleichen Statorzähne 31 einer Statorzahnanordnung 36, so dass keine induktionsbedingte Asymmetrie hinsichtlich der Eigenschaften der Transversalflussmaschine 1 auftreten kann. Insbesondere sind die induzierten Spannungen, der Phasenwiderstand und die Induktivität für jede Phase nahezu identisch.

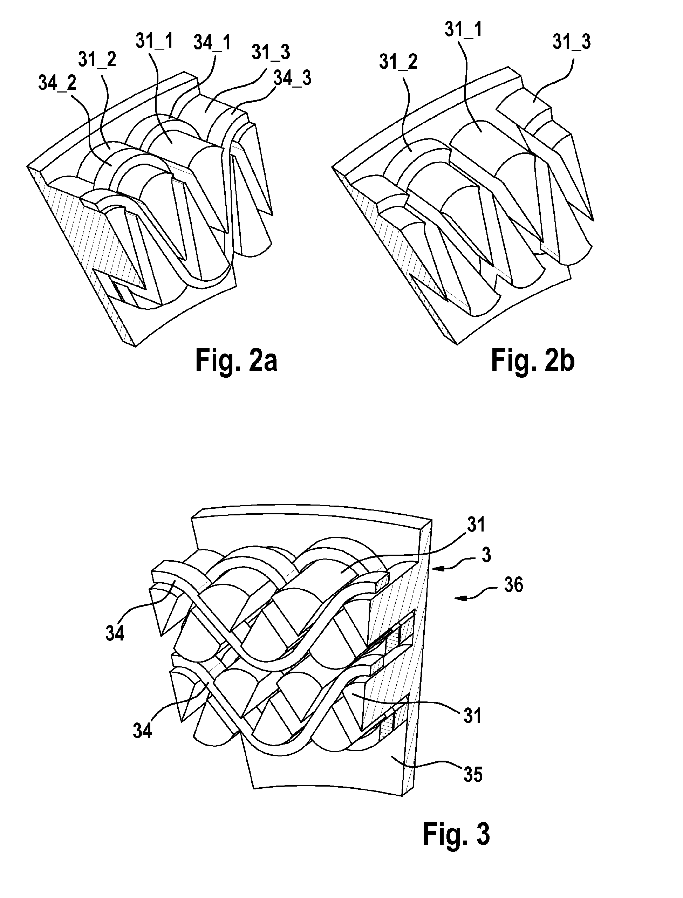

In den Figuren 2a und 2b sind perspektivische Ansichten von Ausschnitten einer Variante einer Statoreinheit 3 dargestellt, in denen die Statorzähne 31 eine leicht modifizierte Struktur aufweisen. Insbesondere sind die Statorzähne 31 im Wechsel unterschiedlich ausgebildet, je nachdem, welche der Statorwicklungen 34 das jeweils breitere Ende 38 der Statorzähne 31 umläuft.

So kann allgemein das breitere Ende 38 der Statorzähne 31 abschnittsweise in Längsrichtung vergrößert bzw. verlängert werden. Die Verlängerung kann etwa der Dicke der Wicklungsstränge der Statorwicklungen 34 entsprechen oder kleiner oder größer als diese sein. Der verlängerte Abschnitt entspricht dem Teil des Statorzahns 31, der axial zwischen dem betreffenden Wicklungsstrang und dem Rückschlussbereich 35 liegt. So kann eine erste Statorwicklung 34_1 in einer ersten Lage, die sich am nächsten an dem Rückschlussbereich 35 befindet, die breiteren Enden 38 der die erste Statorwicklung 34_1 betreffenden ersten Statorzähne 31_1 umlaufen. Diese ersten Statorzähne 31_1 sind dann entsprechend den Statorzähnen 31 der Ausführungsform der Figur 1a bis 1c ausgebildet. Eine zweite Lage, die durch eine zweite Statorwicklung 34_2 gebildet wird und die durch die erste Lage der ersten Statorwicklung 34_1 von dem Rückschlussbereich 35 beabstandet ist, umläuft zweite Statorzähne 31_2, die in einem Abschnitt in axialer Richtung A zwischen der zweiten Lage der zweiten Statorwicklung 34_2 und dem Rückschlussbereich 35 verlängert sind, um so die Querschnitte der zweiten Statorzähne 31_2 dort zu vergrößern. Dies kann dazu beitragen, durch die Statorwicklungen 34 hervorgerufene Sättigungseffekte des magnetischen Flusses in dem Material der Statoreinheit 3 zu reduzieren.

Dritte Statorzähne 31_3, die von der dritten Statorwicklung 34_3 in einer dritten Lage umlaufen werden, sind in einem Abschnitt in axialer Richtung A zwischen der dritten Lage der dritten Statorwicklung 34_3 und dem Rückschlussbereich 35 verlängert, um deren Querschnitte zu vergrößern.

Die entsprechenden zweiten und dritten Statorzähne 31_2, 31_3 sind also im Bereich ihres breiten Endes 38 und in ihrem dem Rückschlussbereich 35 zugewandten Abschnitt vergrößert vorgesehen, so dass dort eine Stufe gebildet wird, an der die entsprechende Statorwicklung 34_1, 34_2, 34_3 anliegt. Durch das so vergrößerte breite Ende 38 der Statorzähne 31 kann zudem eine Vereinfachung des Einbringens der Wicklungsstränge der Statorwicklungen 34 erreicht werden, da diese in fest definierten Lagen an den Statorzähnen 31 angeordnet werden können.

Figur 3 zeigt eine weitere Ausführungsform, in der anstelle einer Statorzahnanordnung 36 für jede Statoreinheit 3 zwei zueinander konzentrische Statorzahnanordnungen 36 vorgesehen sind. Auch größere Anzahlen von Statorzahnanordnungen 36 pro Statoreinheit 3 sind denkbar. Jede der Statorzahnanordnungen 36 ist wie zuvor beschrieben mit keilförmigen bzw. kreissegmentförmigen Statorzähnen 31 ausgebildet, wobei jede der Statorzahnanordnungen 36 mit Statorwicklungen 34 für jede Phase versehen ist. Die Statorzahnanordnungen 36 schließen sich in radialer Richtung R aneinander an und weisen eine Gesamthöhe auf, die im Wesentlichen der radialen Gesamthöhe der Permanentmagneten 4 in dem Scheibenrotor 2 entspricht.

Eine elektrische Maschine 1 mit zwei oder mehr als zwei Statorzahnanordnungen 36 kann in einfacherer Weise hergestellt werden, da die Wicklungsstränge der Statorwicklungen 34 aufgrund der größeren Biegeradien einfacher eingelegt werden können. Insbesondere für elektrische Maschine 1 mit größerem Durchmesser ist eine solche Variante vorteilhaft. Die Verteilung des magnetischen Kreises auf mehrere Statorzahnanordnungen 36 ermöglicht zudem auch eine Reduzierung von Wirbelstromverlusten in den Permanentmagneten 4 des Scheibenrotors 2.

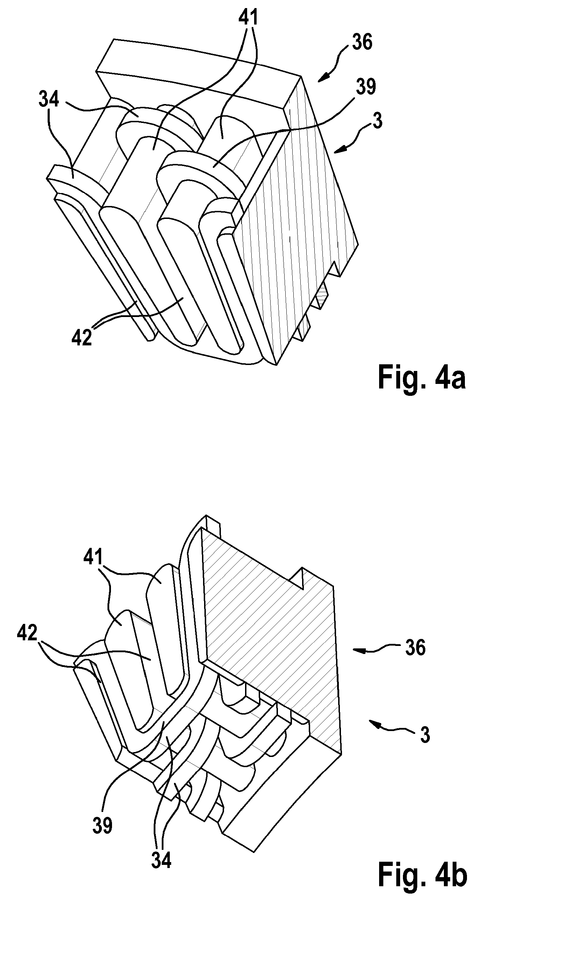

Die Figuren 4a und 4b zeigen perspektivische Darstellungen eines Ausschnitts einer Statoreinheit 3 gemäß einer weiteren Ausführungsform. Von der Statoreinheit 3 stehen in axialer Richtung A Statorzähne 41 ab, die von Schlingen 39 mehrerer Statorwicklungen 34 umlaufen werden. Die Statorzähne 41 sind jedoch nicht keilförmig oder kreissegmentförmig ausgebildet, sondern als in Umfangsrichtung U nebeneinander angeordnete radial verlaufende Stege, zwischen denen Zwischenräume 42 im Wesentlichen ebenfalls in radialer Richtung R verlaufen. Die radial äußeren und inneren Enden der Stege sind abgerundet, so dass sich der entsprechende Wicklungsstrang der entsprechenden Statorwicklung 34 an den Verlauf der Rundung anschmiegen kann.

Die drei den Phasen zugeordneten Statorwicklungen 34 sind nun in drei Lagen um die stegförmigen Statorzähne 41 angeordnet. Im gezeigten Ausführungsbeispiel umläuft ein Wicklungsstrang einer ersten Statorwicklung 34_1 einen Statorzahn 41 an seinem radial äußeren Ende und wird in den Zwischenräumen 42 an beiden Seiten des Statorzahns 41 radial nach innen geführt. Entsprechend der Anzahl n der Phasen erfolgt dies für jeden n-ten Statorzahn 41. Dies bedeutet, dass ein Wicklungsstrang jeder der Statorwicklungen 34 an jedem n-ten Statorzahn 41 an einer Seite durch den Zwischenraum 42 des betreffenden Statorzahns 41 radial nach außen geführt wird, an dem äußeren Ende des betreffenden Statorzahns 41 anliegt und diesen umläuft und durch den weiteren Zwischenraum 42 an einer gegenüberliegenden Seite des Statorzahns 41 wieder radial nach innen geführt wird.

Im Falle einer dreiphasigen elektrische Maschine 1 bestimmt dieses Wicklungsschema, dass jede Lage der Statorwicklungen 34 um jeweils einen Statorzahn 41 versetzt vorgesehen ist, so dass jede der Statorwicklungen 34 im Wechsel eine erste Schlinge 39 um einen Statorzahn 41 und anschließend eine zweite, zur ersten benachbarten Schlinge 39 um zwei Statorzähne 41 aufweist. Selbstverständlich kann alternativ vorgesehen sein, dass ein Wicklungsstrang der Statorwicklungen 34 mit einer ersten Schlinge 39 jeweils zwei benachbarte Statorzähnen 41 an ihren radial äußeren Enden umschließt und mit einer zweiten Schlinge 39 jeweils nur einen Statorzahn 41 an seinem entsprechenden radial inneren Ende umschließt.

Die Ausführungsform der Figur 4 ermöglicht eine Verbesserung des Füllfaktors der elektrische Maschine 1, da die Statorzähne 41 größer als bei den Ausführungsformen der Figuren 1 bis 3 vorgesehen werden können. Dadurch können Sättigungseffekte reduziert und die Polpaarzahl erhöht werden.

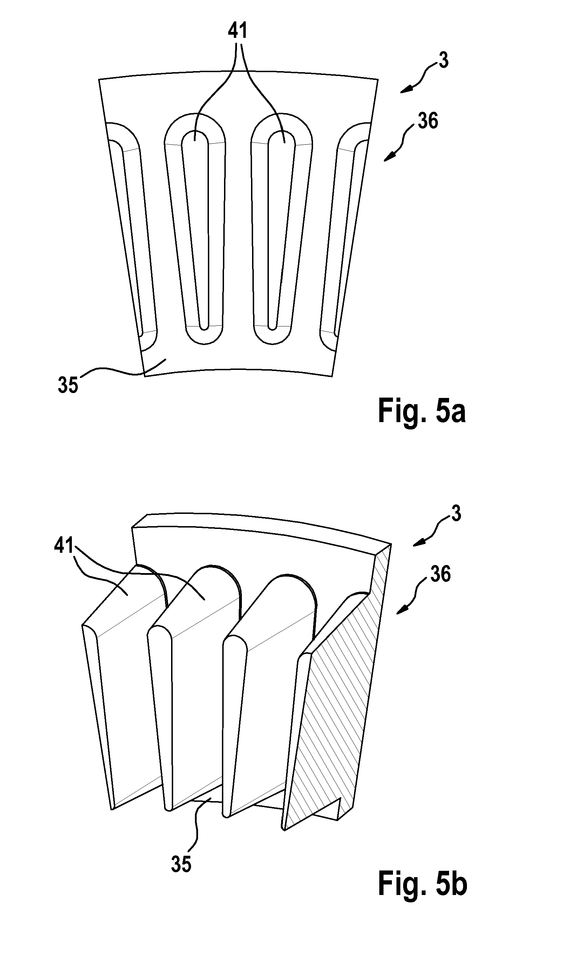

Die Figuren 5a und 5b zeigen verschiedene Ansichten einer möglichen Variante einer Ausführung der Statorzähne 41 der Ausführungsform der Figuren 4a und 4b, in denen die stegförmigen Statorzähne 41 als sich in einer axialen Richtung A verjüngend ausgebildet werden, wobei deren Querschnitte in einer vom Rückschlussbereich 35 weg führenden Richtung abnehmen, was den Aufbau der Statoreinheit 3 durch einen Pressprozess erleichtert. Weiterhin kann dadurch die Phaseninduktivität reduziert werden, da der Luftspalt zwischen benachbarten Statorzähnen 41 erhöht wird. Dadurch können Sättigungseffekte weiter reduziert werden.

## Patentansprüche

1. Statoreinheit (3) für eine mehrphasige elektrische Maschine (1), umfassend:
- einen Rückschlussbereich (35) aus magnetischem Material mit einer Fläche; und
- mehrere von der Fläche hervorstehende Statorzähne (31, 41), die in Umfangsrichtung (U) zueinander benachbart in mindestens einer kreisförmigen Statorzahnanordnung (36) angeordnet sind und zwischen denen Zwischenräume (32, 42) zur Aufnahme von Statorwicklungen (34) vorgesehen sind, wobei durch die Zwischenräume (32, 42) Statorwicklungen (34) für jede Phase geführt sind, so dass jede der Statorwicklungen (34) mehrfach in Form von Schlingen (39) zwischen mindestens einem radial äußeren Ende mindestens eines Statorzahns (31, 41) und mindestens einem radial inneren Ende mindestens eines weiteren Statorzahns (31, 41) der Statorzahnanordnung (36) verläuft.

2. Statoreinheit (3) nach Anspruch 1, wobei die Statorzähne (31) entlang einer radialen Erstreckung keilförmig und/oder kreissegmentförmig mit jeweils einem breiten Ende (38) und einem verjüngten Ende (37) ausgebildet sind, wobei die verjüngten Enden (37) von jeweils zwei benachbarten Statorzähnen (31) entgegengesetzt ausgerichtet sind, so dass ein verjüngtes Ende (37) eines Statorzahns (31) zwischen zwei breiten Enden der benachbarten Statorzähne (31) angeordnet ist.

3. Statoreinheit (3) nach Anspruch 2, wobei ein Wicklungsstrang mindestens einer der Statorwicklungen periodisch um ein breites Ende (38) eines äußeren der Statorzähne (31 a), dessen breites Ende (38) radial außen angeordnet ist, anschließend beidseitig davon durch Zwischenräume (32), die zwischen einem zu dem betreffenden äußeren Statorzahn (31 a) benachbarten inneren Statorzahn (31 b), dessen breites Ende radial innen angeordnet ist, und einem zu dem betreffenden äußeren Statorzahn (31a) benachbarten äußeren Statorzahn (31 a) vorgesehen sind, und anschließend beidseitig des betreffenden äußeren Statorzahn (31a) jeweils um ein breites Ende (38) eines inneren Statorzahns (31b) geführt, der zu dem betreffenden äußeren Statorzahn (31a) jeweils um drei Statorzähne (31) in Umfangsrichtung U versetzt angeordnet ist.

4. Statoreinheit (3) nach Anspruch 1, wobei die Statorzähne (41) stegförmig entlang einer radialen Erstreckung ausgebildet und insbesondere in Umfangsrichtung (U) mit gleichem Abstand zueinander angeordnet sind.

5. Statoreinheit (3) nach Anspruch 4, wobei periodisch entsprechend einer Anzahl n der Phasen für jeden n-ten Statorzahn (41) einer der Wicklungsstränge einer der Statorwicklungen (34_1, 34_2, 34 3) einen der Statorzähne (41) an seinem radial äußeren Ende umläuft und in den Zwischenräumen (42) an beiden Seiten des Statorzahns (41) radial nach innen geführt wird.

6. Statoreinheit (3) nach einem der Ansprüche 1 bis 5, wobei die Statorzähne (31, 41) mit einer Höhe von dem Rückschlussbereich (35) abstehen, die mindestens der Summe der Dicken der Wicklungsstränge der Statorwicklungen (34) aller Phasen entspricht.

7. Statoreinheit (3) nach einem der Ansprüche 1 bis 6, wobei die Statorzähne (31, 41) an den breiten Enden (38) abgerundet sind, insbesondere zumindest in den Abschnitten, über die ein Wicklungsstrang einer der Statorwicklungen (34) verläuft.

8. Statoreinheit (3) nach einem der Ansprüche 1 bis 7, wobei die mehreren Statorwicklungen (34) in mehreren in axialer Richtung (A) ausgebildeten Lagen um die Statorzähne (31, 41) verlaufen, wobei der Querschnitt von mindestens einem der Statorzähne (31, 41) in einem sich in axialer Richtung (A) erstreckenden Abschnitt durch Verlängerung mindestens eines Endes vergrößert ist, wobei sich der Abschnitt zwischen dem Rückschlussbereich (35) und der Statorwicklung (34) befindet.

9. Statoreinheit (3) nach einem der Ansprüche 1 bis 8, wobei die Statorzähne (31, 41) als sich in Richtung ihres abstehenden Endes verjüngend ausgebildet sind.

10. Statoreinheit (3) nach einem der Ansprüche 1 bis 9, wobei mehrere konzentrisch angeordnete Statorzahnanordnungen (36) vorgesehen sind.

11. Elektrische Maschine (1), umfassend:
- einen Scheibenrotor (2) mit in Umfangsrichtung (U) polarisierten Permanentmagneten (4); und
- mindestens eine Statoreinheit (3) nach einem der Ansprüche 1 bis 10, die axial versetzt zu dem Scheibenrotor (2) angeordnet ist, wobei sich die radialen Breiten der Permanentmagnete (4) und der mindestens einen Statorzahnanordnung (36) entsprechen und die Permanentmagnete (4) einander in axialer Richtung (A) gegenüberliegen.
